# EUROPÄISCHE PATENTSCHRIFT

(11) **EP 0 890 031 B1**
(45) Veröffentlichungstag und Bekanntmachung des Hinweises auf die Patenterteilung: **24.10.2001**
(21) Anmeldenummer: 97919308.3
(22) Anmeldetag: 27.03.1997
(51) Int. Cl.: F16B 33/00

(54) **VERSCHRAUBUNGSELEMENT**
SCREW FITTING ELEMENT
ELEMENT A VISSER

(30) Priorität: 28.03.1996 DE 29605811 U
(43) Veröffentlichungstag der Anmeldung: 13.01.1999
(73) Patentinhaber: Hagedorn, Klaus, 58097 Hagen (DE)
(72) Erfinder: Hagedorn, Klaus, 58097 Hagen (DE)
(74) Vertreter: Zapf, Christoph, Dipl.-Ing.
(86) Internationale Anmeldenummer: EP9701588
(87) Internationale Veröffentlichungsnummer: WO9737141

(56) Entgegenhaltungen:
- DE-A- 1 910 029
- DE-A- 2 103 840
- DE-C- 4 343 111
- GB-A- 813 048
- GB-A- 830 722
- US-A- 2 795 144
- US-A- 4 316 690

## Beschreibung

Die vorliegende Erfindung betrifft ein Verschraubungselement, insbesondere aus Metall, wie Schraube oder Mutter, mit einem metallischen Kopfteil und einem Gewindeteil, wobei auf dem Kopfteil ein aus elastisch verformbarem Material bestehender Dichtkörper aufgebracht ist, der im Übergangsbereich zwischen einer am Kopfteil unterseitig ausgebildeten Auflagefläche und einer Außenfläche des Kopfteils einen umfangsgemäßen Dichtbereich aufweist, der derart ausgebildet und/oder angeordnet ist, daß die Unterseite des Dichtbereichs gegenüber der Anlagefläche um ein geringes Maß vorsteht, jedoch im angezogenen Zustand des Verschraubungselementes eine unmittelbare Anlage der Auflagefläche am Bauteil vorhanden und so der Spalt zwischen dem Kopfteil und einem an dessen Auflagefläche anliegenden Bauteil umfangsgemäß zumindest flüssigkeitsdicht abdichtbar ist, wobei der Dichtbereich in einer von einer Stufenfläche und einer Stirnfläche gebildeten Ausnehmung des Kopfteils zumindest teilweise gekammert ist und wobei der Kopfteil einen Betätigungsabschnitt aufweist, der aus dem Dichtkörper herausragt.

Bei Schraubverbindungen zwischen aus z.B. Stahl bestehenden Schrauben und/oder Muttern einerseits und Bauteilen aus Aluminium- oder Magnesiumlegierungen andererseits besteht das Problem, daß bei einem Zutritt von z.B. Wasser aufgrund des zwischen den Bauteilen und dem Verschraubungselement bestehenden elektrischen Potentialunterschiedes eine Elektrolytbildung erfolgt, die eine Kontaktkorrosion verursacht.

Ein Verschraubungselement der eingangs genannten Art ist in der GB-A-813 048 beschrieben. Dieses bekannte Verschraubungselement dient zur Minderung der Korrosion metallischer Teile. Es besitzt an seinem äußeren Umfang eine Ausnehmung, in die ein Ring aus einem elastisch verformbaren Isolatormaterial, wie z.B. synthetischer Kunststoff, vorzugsweise Polyamid, eingesetzt ist. Der Ring besitzt im Querschnitt gesehen die Gestalt eines Vierecks, dessen eine Ecke, wenn das Verschraubungselement noch nicht angezogen ist, auf einem, mit dem Verschraubungselement zu verbindenden Basisteil aufliegt. Eine (ebene) Seite ragt dabei schräg von der Oberfläche des Basisteils ab und legt sich beim Anziehen in paralleler Lage an diese Oberfläche an. Die Länge dieser Seite, d.h. die Ringbreite, soll dabei ausreichend groß bemessen sein, um die Entstehung von Lokalelementen, die sich bei unterschiedlichen metallischen Werkstoffen des Verschraubungselementes und des Basisteils aufgrund der unterschiedlichen Stellung der Metalle in der elektrochemischen Spannungsreihe bilden könnten, weitgehend zu verhindern. Bei einer unebenen oder rauhen Oberfläche des Basisteils kann es aber unter Umständen dabei zur Ausbildung von Leckpfaden zwischen dem Verschraubungselement und dem Basisteil kommen. Ein weiterer Nachteil besteht darin, daß sich bei mehrmaligen Verschraubungen durch die am Umfang angreifenden Kräfte bzw. Drehmomente der Ring ablösen kann, wozu auch eine Alterung des Ringwerkstoffes in ungünstiger Weise beitragen kann.

Ein Verschraubungselement der eingangs genannten Art ist auch aus der DE-C-43 43 111 bekannt. Auch mit der in diesem Dokument beschriebenen Schraubenkopf- oder Mutterndichtung aus Kunststoff soll eine Kontaktkorrosion bei metallischen Werkstücken verhindert werden. Dieses Verschraubungselement weist ebenfalls die vorstehend beschriebenen Nachteile auf.

In der US-A-4 316 690 ist ein mit einer Kappe versehener Bolzen beschrieben. Die Kappe kann bei einer Ausführung dieses Bolzens außer einem in Einschraubrichtung gerichteten, zur Abdichtung bestimmten Wulst, eine zweite, im wesentlichen seitwärts gerichtete wulstartige Ausformung aufweisen. Beim Anziehen des Bolzens kann der aus einem elastisch verformbaren Material bestehende Dichtkörper zerstört werden, bzw. er wird gezielt zerstört, weil er zwischen das metallische Kopfteil und das Basisteil des Bolzens gequetscht wird. Eine dauerhafte bzw. mehrfache Verwendung der Verschraubungselemente ist dadurch nicht gegeben. Auch der Kraftfluß vom Kopf- zum Basisteil, d.h. die Übertragung der Spannkräfte, ist bei diesem bekannten Verschraubungselement gestört.

Das der vorliegenden Erfindung zugrunde liegende Problem besteht darin, ein Verschraubungselement der gattungsgemäßen Art hinsichtlich seiner Wirksamkeit und der Dauerhaftigkeit seiner Funktionserfüllung, d.h. der Verhinderung einer Kontaktkorrosion, zu verbessern, wobei die dazu notwendige Isolation gegen Feuchte auch unter externer Kraftbeaufschlagung des Kopfteils gewährleistet sein soll.

Erfindungsgemäß wird dies dadurch erreicht, daß im Übergangsbereich zwischen der Unterseite und einer äußeren Umfangsfläche des Dichtkörpers eine Ringwulst ausgebildet ist, die die Unterseite überragt, und daß auf der Außenfläche des Kopfteils umfangsgemäß eine Formschlußverbindung oder Kraftformschlußverbindung zwischen dem Kopfteil und dem Dichtkörper zur Sicherung gegen Relativverdrehungen ausgebildet ist.

Durch die erfindungsgemäß an dem Verschraubungsgelement vorgesehene Ringwulst wird eine doppelt wirksame, gas- und flüssigkeitsdichte Abdichtung gewährleistet. Die Abdichtung erfolgt dabei einerseits durch die Unterseite des Dichtbereichs und andererseits durch die Ringwulst. Außerdem kann durch die erfindungsgemäß vorgesehene Formschlußverbindung oder Kraftformschlußverbindung zwischen dem Kopfteil und dem Dichtkörper zwischen diesen Teilen auch bei externer Kraftbeaufschlagung keine Spaltbildung auftreten, da die Teile gegen Relativverdrehungen gesichert sind.

Dadurch, daß im angezogenen Zustand der Verschraubung eine unmittelbare Anlage der Auflagefläche am Bauteil vorhanden ist, wird verhindert, daß sich das Material des Dichtbereiches in den Bereich der Auflagefläche so hinein verformen könnte, daß zwischen den Bauteilen und dem Kopfteil nur noch eine mittelbare Anlage vorhanden wäre. Vielmehr ist sichergestellt, daß die beim Anziehen der Verschraubung auftretenden Vorspannkräfte unmittelbar in das Bauteil eingeleitet werden, ohne daß das elastisch verformbare Material des Dichtkörpers den Kraftschluß unterbrechen könnte.

Der erfindungsgemäße Dichtkörper besteht vorzugsweise aus einem thermoplastischen Kunststoff, der lösungsmittelfest, UV-beständig und temperaturbeständig ist, so daß trotz auftretender äußerer Umgebungseinflüsse eine dauerhafte Elastizität gewährleistet bleibt. Als Material für das Verschraubungselement kann Metall, insbesondere Stahl oder Leichtmetall, aber auch Nichtmetall, z.B. ein Kunststoff, Verwendung finden.

Anhand der in den beiliegenden Zeichnungen dargestellten Ausführungsbeispiele wird die Erfindung näher erläutert. Es zeigen:
- Fig. 1: eine teilgeschnittene Ansicht eines als Schraube ausgebildeten Verschraubungselementes,
- Fig. 2: eine Einzelheit bei II in Fig. 1 in vergrößertem Maßstab,
- Fig. 3: eine Teilansicht einer Schraube im angezogenen Zustand, zum Teil geschnitten,
- Fig. 4: einen Teilschnitt durch eine erfindungsgemäße Schraube in einer Ausführungsvariante,
- Fig. 5: eine Aufsicht auf die Schraube gemäß Fig. 4,
- Fig. 6: einen Längsschnitt eines als Mutter ausgebildeten erfindungsgemäßen Verschraubungselementes,
- Fig. 7: eine Draufsicht in Pfeilrichtung VII gemäß Fig. 6,
- Fig. 8: ein erfindungsgemäßes Verschraubungselement in einer Ausführung als Hutmutter im Längsschnitt,
- Fig. 9: eine Draufsicht in Pfeilrichtung IX gemäß Fig. 8,
- Fig. 10: eine Darstellung einer Mutter analog zu Fig. 6 in einer vorteilhaften Weiterbildung und
- Fig. 11: eine Draufsicht in Pfeilrichtung XI gemäß Fig. 10.

In den verschiedenen Figuren der Zeichnungen sind gleiche Teile stets mit denselben Bezugszeichen versehen.

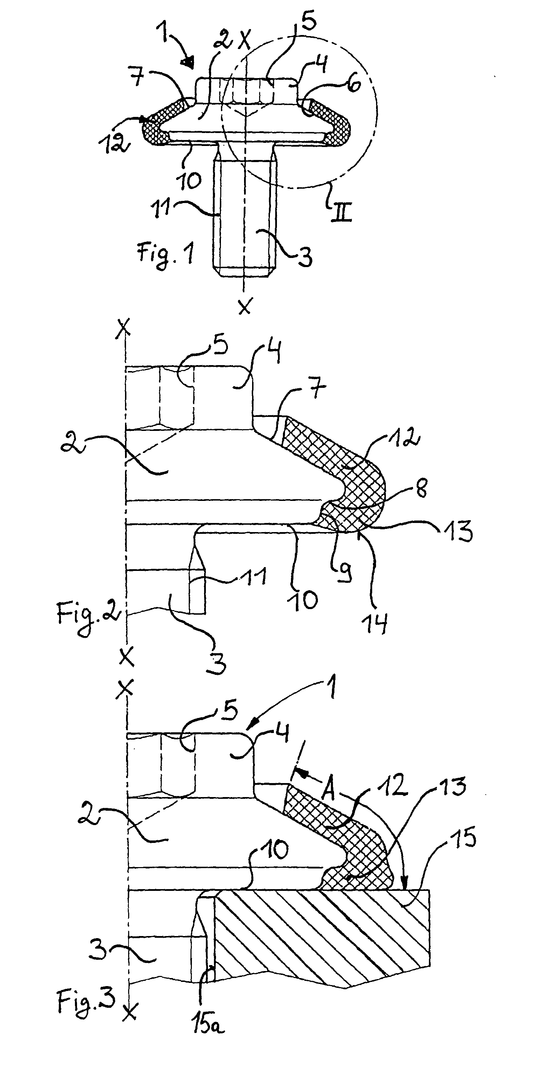

Wie aus Figuren 1 bis 3 zu erkennen ist, besteht eine erfindungsgemäße Schraube 1 aus einem als Schraubenkopf ausgebildeten Kopfteil 2 und einem als Gewindeschraubenschaft ausgebildeten Gewindeteil 3. Die erfindungsgemäße Schraube 1 besteht aus Metall, vorzugsweise aus Stahl oder Leichtmetall, und wird z.B. auch für hochfeste Schraubverbindungen verwendet. Der Schraubenkopf 2 weist an seiner Oberseite einen Betätigungsabschnitt 4 auf, der im vorliegenden Ausführungsbeispiel einen Innensechskant 5 besitzt. An den Betätigungsabschnitt 4 schließt sich in Richtung auf den Gewindeschraubenschaft 3 ein kegelstumpfförmiger Abschnitt 6 an. Der kegelstumpfförmige Abschnitt 6 besitzt eine Außenfläche 7. An dem dem Gewindeschraubenschaft 3 zugekehrten Ende des kegelstumpfförmigen Abschnittes 6 ist vorzugsweise eine radial nach innen gerichtete Stufenfläche 8 ausgebildet, an die sich eine etwa axial verlaufende Stirnfläche 9 anschließt. Die Stirnfläche 9 endet an einer an der Unterseite des Schraubenkopfes 2 ausgebildeten Auflagefläche 10, die in dem dargestellten Ausführungsbeispiel senkrecht zur Schraubenlängsachse X-X verläuft, wobei jedoch auch ein anderer Verlauf unter einem stumpfen oder einem spitzen Winkel zur Längsachse im Rahmen der Erfindung möglich ist. Auf dem Gewindeschraubenschaft 3 ist ein Gewinde 11 ausgebildet, wobei jede beliebige Gewindeform denkbar ist.

Wie sich weiterhin aus Fig. 1 ergibt, weist der Schraubenkopf 2 einen Dichtkörper 12 auf. Dieser Dichtkörper 12 besteht vorzugsweise aus einem elastisch verformbaren Material, wobei insbesondere ein thermoplastisches Kunststoffmaterial gewählt ist. Dieses elastisch verformbare Material soll erfindungsgemäß lösemittelfest, UV-beständig und temperaturbeständig sein, so daß die elastischen Eigenschaften des Materials durch äußere Einflüsse nicht veränderbar sind. Der Dichtkörper 12 ist im vorliegenden Ausführungsbeispiel kappenförmig ausgebildet, wobei der Betätigungsabschnitt 4 aus dem Dichtkörper 12 herausragt. Vorzugsweise wird der Dichtkörper 12 auf den Schraubenkopf 2 durch Spritzgießen aufgebracht. Hierdurch entsteht eine innige vollflächige Verbindung zwischen dem Dichtkörper 12 und dem Schraubenkopf 2, so daß der Spaltbereich zwischen diesen beiden Teilen gas- und feuchtigkeitsdicht ist und ein Ablösen auch unter externer Kraftbeaufschlagung nicht erfolgt. Der Dichtkörper 12 weist an seinem dem Gewindeschraubenschaft 3 zugekehrten Ende einen umfangsgemäß verlaufenden Dichtbereich 13 auf. Im dargestellten Ausführungsbeispiel nach Fig. 1 bis 3 ist dieser Dichtbereich 13 wulstförmig ausgebildet und erstreckt sich in einen Absatzbereich, der durch die Stufenfläche 8 und die Stirnfläche 9 gebildet ist. Durch die gewählte Wulstform überragt der Dichtbereich 13 den Schraubenkopf, d.h. dessen Auflagefläche 10 in axialer Richtung.

Durch die erfindungsgemäße Ausgestaltung des Schraubenkopfes 2 im Bereich der Stufenfläche 8 und der Stirnfläche 9 wird er dort kammerförmig zum Teil aufgenommen. Der Dichtbereich 13 weist eine im Schnitt gesehen konvex bogenförmige Dichtfläche 14 auf. Die Ausgestaltung der erfindungsgemäßen Schraube 1 im Bereich des Schraubkopfes 2 ist insbesondere in Fig. 2 zu erkennen. Der Dichtkörper 12 besitzt beispielsweise eine Wandstärke von 1, 5 mm im Bereich des kegelstumpfförmigen Abschnittes 6 und er verdickt sich im Bereich des Dichtbereiches 13.

Wie aus Fig. 3 zu erkennen ist, in der die erfindungsgemäße Schraube 1 im angezogenen Zustand dargestellt ist, liegt der Schraubenkopf 2 mit seiner Auflagefläche 10 unmittelbar an einem Bauteil 15 an. Dieses Bauteil 15 kann beispielsweise aus einer Aluminium- oder einer Magnesiumlegierung bestehen. Das Bauteil 15 weist eine Durchgangsbohrung 15a auf, durch die der Gewindeschraubenschaft 3 der Schraube 1 verläuft. Aufgrund der erfindungsgemäßen Ausbildung und Anordnung des Dichtkörpers 12 am Schraubenkopf 2 wird erreicht, daß im angezogenen Zustand der Schraube 1 der im Übergangsbereich zwischen der Auflagefläche 10 und der Außenfläche 7 ausgebildete Spalt zwischen dem Schraubenkopf 2 und dem Bauteil 15 gas- und flüssigkeitsdicht abgedichtet ist. Diese erfindungsgemäße Abdichtung wird durch den Dichtbereich 13 des Dichtkörpers 12 bewirkt, der sich elastisch derart verformt, daß eine vollflächige Auflage auf dem Bauteil 15 im angezogenen Zustand der Schraube 1 erreicht wird, wobei durch die erfindungsgemäße Formgebung des Dichtbereiches 13 in Verbindung mit der Anordnung des Dichtkörpers 12 insbesondere im Bereich der Stirnfläche 9 und der Stufenfläche 8 ein Einwandern des Materials des Dichtkörpers 12 in den Anlagebereich der Auflagefläche 10 verhindert wird. Somit ist im Bereich der Auflagefläche 10 stets eine unmittelbare Anlage zum Bauteil 15 gewährleistet, die einen ungestörten Kraftschluß und eine unmittelbare Übertragung der Vorpannkräfte zwischen der Schraube 1 und dem Bauteil 15 sicherstellt. Durch die erfindungsgemäße Abdichtung im Spaltbereich wird ein gas- und flüssigkeitsdichter Abschluß des Auflagebereichs des Schraubenkopfes 2 nach außen gewährleistet, so daß keine Elektrolytbildung auftreten kann und somit eine Kontaktkorrosion verhindert wird.

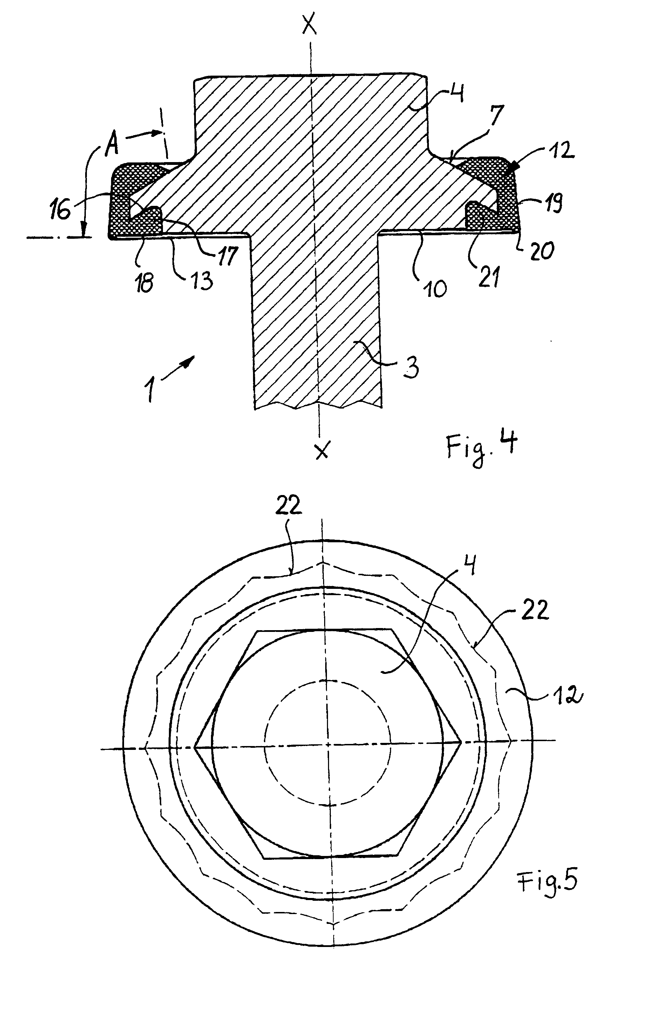

In Fig. 4 ist eine weitere Ausführungsform der erfindungsgemäßen Schraube 1 dargestellt. Hierbei sind gleiche Teile wie in den Fig. 1 bis 3 mit denselben Bezugsziffern versehen. Bei dieser Ausgestaltung besitzt der Schraubenkopf 2 an seinem dem Gewindeschraubenschaft 3 zugekehrten Ende eine Stufenfläche 16, die unter einem spitzen Winkel zur Anlagefläche 10 verläuft, sowie eine parallel zur Schraubenlängsachse verlaufende Stirnfläche 17. Diese beiden sich schneidenden Flächen 16, 17 bilden eine Ausnehmung, in der der Dichtkörper 12 mit einem Fortsatz 21 formschlüssig gekammert ist. Der Fortsatz 21 ist ein Teil des Dichtbereichs 13 des Dichtkörpers 12. Die Unterseite 18 des Dichtbereichs 13 verläuft um ein geringes Maß gegenüber der Anlagefläche 10 vorstehend. Weiterhin ist zu erkennen, daß im Übergangsbereich zwischen der Unterseite 18 und einer äußeren Umfangsfläche 19 des Dichtkörpers 12 eine Ringwulst 20 angeformt ist, die die Unterseite 18 überragt. Die Höhe des Ringwulstes 20 ist relativ klein und beträgt beispielsweise etwa 0,5 mm. Durch die vorgesehene erfindungsgemäße Kammerung des Dichtkörpers 12 wird ein Wegfließen des Dichtkörpermaterials beim Anziehen der Schraube verhindert. Die Ringwulst 20 stellt in Verbindung mit der Unterseite 18 des Dichtbereichs 13 die Abdichtung sicher, so daß ein gas- und flüssigkeitsdichter Abschluß erreicht wird.

In Fig. 5 ist dargestellt, daß es zweckmäßig ist, wenn zwischen dem Schraubenkopf 2 und dem Dichtkörper 12 eine Form- oder Kraftformschlußverbindung derart besteht, daß eine Verdrehsicherung zwischen diesen Teilen erreicht wird. Diese Verbindung wird durch am Umfang des Schraubenkopfes ausgebildete Taschen 22 realisiert, die das Material des Dichtkörpers 12 formschlüssig aufnehmen.

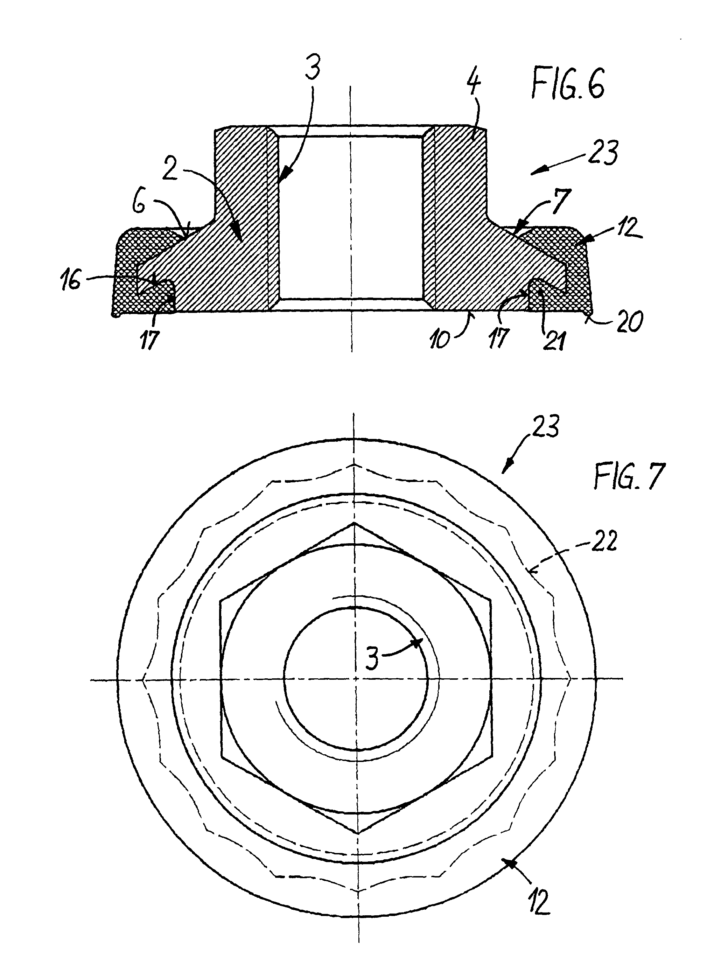

Was nun die Fig. 6 bis 11 betrifft, so sind darin drei Ausführungsbeispiele für ein jeweils als Schraubmutter 23 ausgebildetes, erfindungsgemäßes Verschraubungselement dargestellt. Dabei entspricht die Ausgestaltung des erfindungsgemäßen Dichtkörpers 12 und dessen Halterung grundsätzlich der Ausführungsform der Schraube 1 nach Fig. 4 und 5. Bei der Mutter 23 ist das Kopfteil 2 praktisch von dem gesamten Körper der Mutter selbst gebildet, wobei das Kopfteil 2 als Gewindeteil 3 eine Innengewindebohrung aufweist. Die Auflagefläche 10 ist auf einer Stirnseite der Mutter 23 als ringförmige Stirnfläche gebildet.

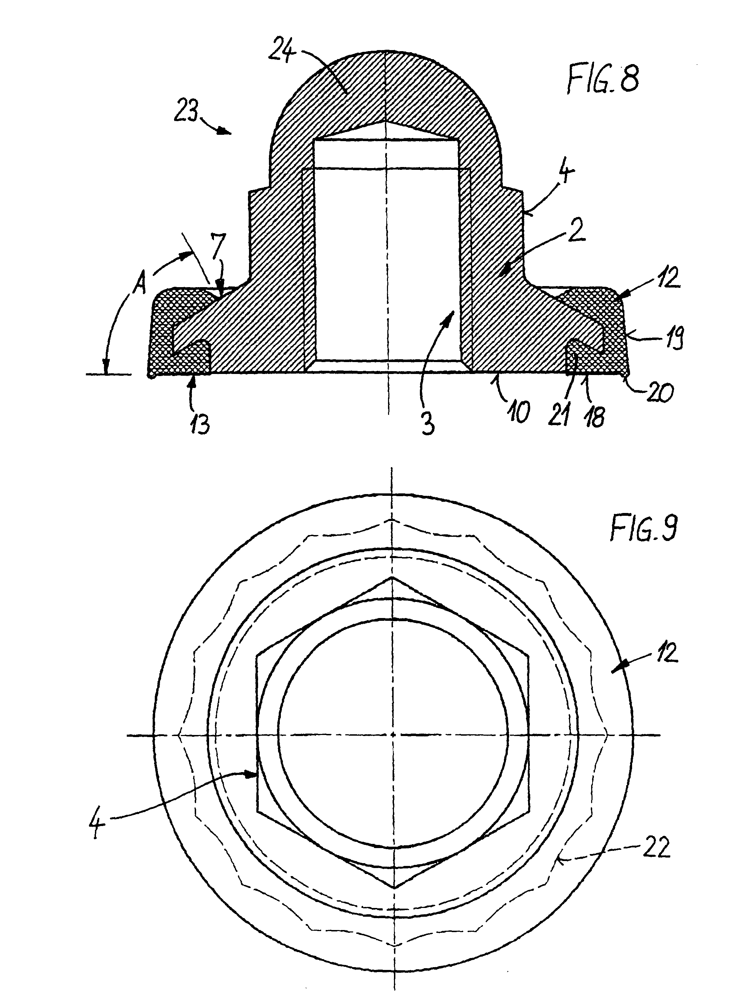

In der Ausführungsform nach Fig. 8 und 9 ist die Mutter 23 als Hutmutter mit einem kappenartigen Verschlußabschnitt 24 ausgebildet. Damit wird die Innengewindebohrung auf ihrer der Auflagefläche 10 abgekehrten Seite vollständig dicht verschlossen, so daß ein Eindringen von Flüssigkeiten und/oder Gasen über den Gewindebereich in den Bereich der am Bauteil 15 anliegenden Auflagefläche 10 sicher vermieden wird, was in der Folge ebenfalls zur Vermeidung von Kontaktkorrosion beiträgt.

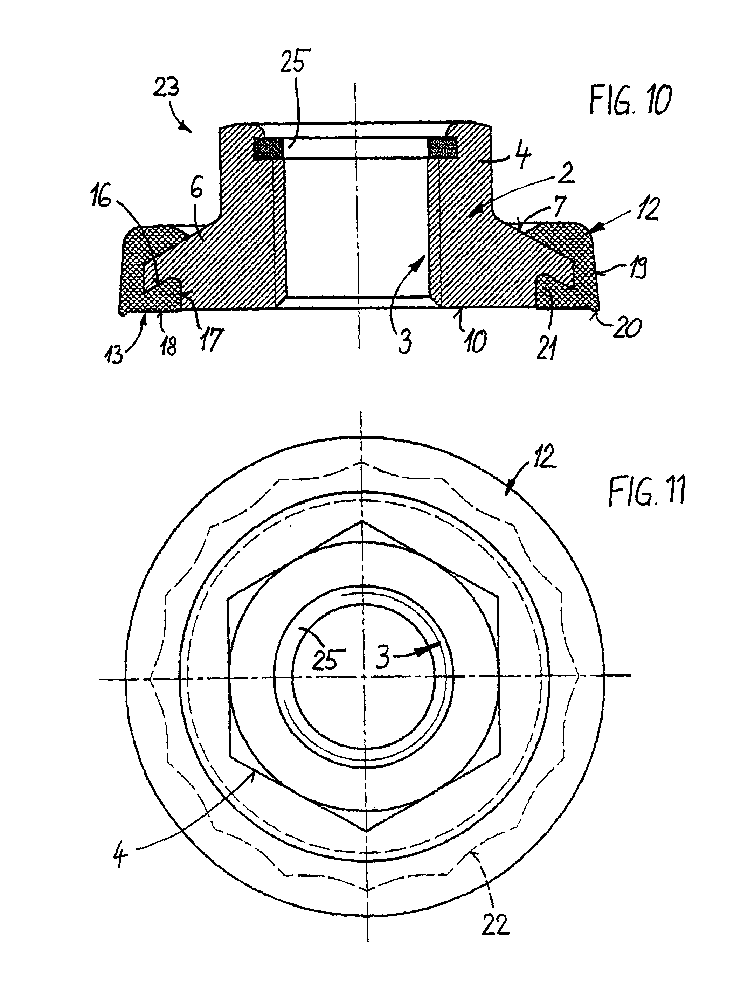

In der Ausführungsform nach Fig. 10 und 11 wird diese Abdichtung dadurch erreicht, daß die Mutter 23 im der Auflagefläche 10 abgekehrten Endbereich der Innengewindebohrung einen Dichtring 25 derart aufweist, daß im mit einem nicht dargestellten Schraubbolzen verschraubten Zustand der Mutter 23 der Ringspalt zwischen der Innengewindebohrung und dem eingeschraubten Schraubbolzen über den Dichtring 25 abgedichtet wird.

Bei der Ausgestaltung als Mutter 23 ist der Betätigungsabschnitt 4 zweckmäßigerweise z.B. durch einen Außensechskant gebildet. Im übrigen wird bezüglich des Dichtkörpers 12 auf die obigen Ausführungen insbesondere zu Fig. 4 und 5 verwiesen.

Ferner ist es bei allen dargestellten Ausführungsformen im Sinne der Aufgabenstellung, Kontaktkorrosionen zu vermeiden, vorteilhaft, wenn der Dichtkörper 12 derart gestaltet ist, daß im angezogenen Zustand zwischen dem Bauteil 15 und einem freiliegenden Abschnitt des Kopfteils 2 über den Dichtkörper 12 hinweg ein Mindestabstand A (vergleiche die Darstellungen in Fig. 3, 4 und 8) derart vorhanden ist, daß jeweils in Abhängigkeit von der Höhe des Potentialunterschiedes zwischen Kopfteil 2 und Bauteil 15 und in Abhängigkeit vom jeweiligen Elektrolyt Kontaktkorrosionen vermieden werden. Als Erfahrungswert hat sich für den Mindestabstand A eine Größe von insbesondere etwa 4 mm als vorteilhaft herausgestellt. Dieser Mindestabstand A wird dadurch gewährleistet, daß der Dichtkörper 12 das erfindungsgemäße Verschraubungsteil entsprechend weit übergreift.

Die vorliegende Erfindung ist nicht auf die gezeigten Ausführungsbeispiele beschränkt, sondern umfaßt alle im Sinne der Erfindung gleichwirkenden Ausgestaltungen.

## Patentansprüche

1. Verschraubungselement, wie Schraube (1) oder Mutter (23), mit einem metallischen Kopfteil (2) und einem Gewindeteil (3), wobei auf dem Kopfteil (2) ein aus elastisch verformbarem Material bestehender Dichtkörper (12) aufgebracht ist, der im Übergangsbereich zwischen einer am Kopfteil (2) unterseitig ausgebildeten Auflagefläche (10) und einer Außenfläche (7) des Kopfteils (2) einen umfangsgemäßen Dichtbereich (13) aufweist, der derart ausgebildet und/oder angeordnet ist, daß die Unterseite (18) des Dichtbereichs (13) gegenüber der Anlagefläche (10) um ein geringes Maß vorsteht, jedoch im angezogenen Zustand des Verschraubungselementes eine unmittelbare Anlage der Auflagefläche (10) am Bauteil (15) vorhanden und so der Spalt zwischen dem Kopfteil (2) und einem an dessen Auflagefläche (10) anliegenden Bauteil (15) umfangsgemäß zumindest flüssigkeitsdicht abdichtbar ist, wobei der Dichtbereich (13) in einer von einer Stufenfläche (8) und einer Stirnfläche (9) gebildeten Ausnehmung des Kopfteils (2) zumindest teilweise gekammert ist und wobei der Kopfteil (2) einen Betätigungsabschnitt (4) aufweist, der aus dem Dichtkörper (12) herausragt, **dadurch gekennzeichnet, daß** im Übergangsbereich zwischen der Unterseite (18) und einer äußeren Umfangsfläche (19) des Dichtkörpers (12) eine Ringwulst (20) ausgebildet ist, die die Unterseite (18) überragt, und daß auf der Außenfläche (7) des Kopfteils (2) umfangsgemäß eine Formschlußverbindung oder Kraftformschlußverbindung zwischen dem Kopfteil (2) und dem Dichtkörper (12) zur Sicherung gegen Relativverdrehungen ausgebildet ist.

2. Verschraubungselement nach Anspruch 1,
**dadurch gekennzeichnet, daß** der Spalt umfangsgemäß gasdicht abgedichtet wird.

3. Verschraubungselement nach Anspruch 1 oder 2,
**dadurch gekennzeichnet, daß** der Dichtbereich (13) im Querschnitt gesehen eine bogenförmige Dichtfläche (14) aufweist.

4. Verschraubungselement nach einem der Ansprüche 1 bis 3,
**dadurch gekennzeichnet, daß** der Dichtbereich (13) in einer von einer unter einem spitzen Winkel zur Auflagefläche (10) verlaufenden Stufenfläche (16) und einer parallel zur Verschraubungslängsachse verlaufenden Stirnfläche (17) gebildeten Ausnehmung gekammert ist.

5. Verschraubungselement nach einem der Ansprüche 1 bis 4,
**dadurch gekennzeichnet, daß** der Dichtkörper (12) derart gestaltet ist, daß im angezogenen Zustand zwischen dem Bauteil (15) und einem freiliegenden Abschnitt des Kopfteils (2) über den Dichtkörper (12) hinweg ein Mindestabstand (A) von insbesondere etwa 4 mm derart vorhanden ist, daß Kontaktkorrosionen bei hohem Potentialunterschied zwischen Kopfteil (2) und Bauteil (15) vermieden werden.

6. Verschraubungselement nach einem der Ansprüche 1 bis 5,
**gekennzeichnet durch** eine Ausgestaltung als Schraube (1), wobei das Kopfteil (2) als Schraubenkopf und das Gewindeteil (3) als vom Schraubenkopf ausgehender Schraubenschaft mit Außengewinde sowie die Auflagefläche (10) als den Schraubenschaft umschließende Stirnfläche des Schraubenkopfes ausgebildet sind.

7. Verschraubungselement nach einem der Ansprüche 1 bis 5,
**gekennzeichnet durch** eine Ausgestaltung als Mutter (23), wobei das Kopfteil (2) als Gewindeteil (3) ein Innengewinde aufweist und die Auflagefläche (10) auf einer Stirnseite der Mutter (23) gebildet ist.

8. Verschraubungselement nach Anspruch 7,
**dadurch gekennzeichnet, daß** das Innengewinde im der Auflagefläche (10) abgekehrten Bereich derart nach außen dicht verschlossen oder dicht verschließbar ist, daß ein Eindringen von Flüssigkeiten und/oder Gasen über den Gewindebereich in den Bereich der am Bauteil (15) anliegenden Auflagefläche (10) vermieden wird.

9. Verschraubungselement nach Anspruch 8,
**dadurch gekennzeichnet, daß** die Mutter (23) als Hutmutter mit einem kappenartigen Verschlußabschnitt (24) abgebildet ist.

10. Verschraubungselement nach Anspruch 8,
**dadurch gekennzeichnet, daß** die Mutter (23) im der Auflagefläche (10) abgekehrten Endbereich des Innengewindes einen Dichtring (25) zum Abdichten eines Ringspaltes zwischen der Innengewindebohrung und einem eingeschraubten Gewindeschaft aufweist.

## Claims

1. Threaded element, such as a screw (1) or nut (23), having a metallic head part (2) and a threaded part (3), a sealing body (12) made of elastically deformable material being attached to the head part (2), which sealing body (12) has a peripheral sealing region (13) in the transition region between a bearing surface (10) formed on the underside of the head part (2) and an outer surface (7) of the head part (2), this sealing region (13) being designed and/or arranged in such a way that the underside (18) of the sealing region (13) projects by a slight amount relative to the bearing surface (10), but, in the tightened state of the screwing element, there is direct contact between the bearing surface (10) and the component (15) and thus the gap between the head part (2) and a component (15) in contact with its bearing surface (10) can be sealed at the periphery at least in a liquid-tight manner, the sealing region (13) being at least partly enclosed in a recess, formed by a step surface (8) and an end face (9), of the head part (2), and the head part (2) having an actuating section (4) which projects from the sealing body (12), **characterized in that** an annular bead (20) is formed in the transition region between the underside (18) and an outer peripheral surface (19) of the sealing body (12) and projects beyond the underside (18), and **in that**, on the outer surface (7) of the head part (2), a positive-locking or frictional/positive-locking connection is formed at the periphery between the head part (2) and the sealing body (12) in order to lock them against relative rotations.

2. Threaded element according to Claim 1, **characterized in that** the gap is sealed in a gas-tight manner at the periphery.

3. Threaded element according to Claim 1 or 2, **characterized in that** the sealing region (13), as viewed in cross section, has a curved sealing surface (14) .

4. Threaded element according to one of Claims 1 to 3, **characterized in that** the sealing region (13) is enclosed in a recess formed by a step surface (16) running at an acute angle to the bearing surface (10) and an end face (17) running parallel to the screwing longitudinal axis.

5. Threaded element according to one of Claims 1 to 4, **characterized in that** the sealing body (12) is configured in such a way that, in the tightened state, there is a minimum distance (A), in particular of about 4 mm, between the component (15) and an exposed section of the head part (2) across the sealing body (12) in such a way that contact corrosion is avoided at high potential difference between head part (2) and component (15).

6. Threaded element according to one of Claims 1 to 5, **characterized by** a configuration as a screw (1), the head part (2) being designed as a screw head, and the threaded part (3) being designed as a screw shank starting from the screw head and having an external thread, and the bearing surface (10) being designed as an end face, encircling the screw shank, of the screw head.

7. Threaded element according to one of Claims 1 to 5, **characterized by** a configuration as a nut (23), the head part (2) having an internal thread as threaded part (3), and the bearing surface (10) being formed on an end face of the nut (23).

8. Threaded element according to Claim 7, **characterized in that** the internal thread, in the region remote from the bearing surface (10), is tightly closed or can be tightly closed on the outside in such a way that ingress of liquids and/or gases via the threaded region into the region of the bearing surface (10) in contact with the component (15) is avoided.

9. Threaded element according to Claim 8, **characterized in that** the nut (23) is designed as a cap nut with a cap-like closure section (24).

10. Threaded element according to Claim 8, **characterized in that** the nut (23), **in that** end region of the internal thread which is remote from the bearing surface (10), has a sealing ring (25) for sealing an annular gap between the internal-thread hole and a screwed-in threaded shank.

## Revendications

1. Elément de vissage tel qu'une vis (1) ou un écrou (23), possédant une partie de tête métallique (2) et une partie filetée (3), dans lequel, sur la partie de tête (2), est appliqué un corps d'étanchéité (12) composé d'une matière élastiquement déformable qui présente, dans la région de transition entre une surface de portée (10) formée sur la partie de tête (2) au niveau de la face inférieure et une surface extérieure (7) de la partie de tête (2), une région d'étanchéité périphérique (13) qui est conformée et/ou disposée de manière que la face inférieure (18) de la région d'étanchéité (13) fasse légèrement saillie par rapport à la surface de portée (10), mais que, dans l'état serré de l'élément de vissage, il y ait un appui direct entre la surface de portée (10) et la pièce (15) et que, de cette façon, la fente entre la partie de tête (2) et une pièce (15) appliquée contre sa surface de portée (10) puisse être fermée à joint étanche, du moins aux liquides, sur la périphérie, la région d'étanchéité (13) étant au moins partiellement chambrée dans un évidement de la partie de tête (2) qui est formé par une surface d'épaulement (8) et une surface frontale (9), et la partie de tête (2) présentant un segment d'actionnement (4) qui émerge du corps d'étanchéité (12),
**caractérisé en ce que**, dans la région de transition entre la face inférieure (18) et une surface périphérique extérieure (19) du corps d'étanchéité (12), est formé un bourrelet annulaire (20) qui déborde au-delà de la face inférieure (18) et **en ce que**, sur la surface extérieure (7) de la partie de tête (2), un assemblage par sûreté de forme ou un assemblage par action de force et sûreté de forme est formé entre la partie de tête (2) et le corps d'étanchéité (12) sur la périphérie pour servir d'arrêt contre les rotations relatives.

2. Elément de vissage selon la revendication 1, **caractérisé en ce que** la fente est fermée à joint étanche aux gaz sur la périphérie;

3. Elément de vissage selon la revendication 1 ou 2, **caractérisé en ce que**, vue en coupe, la région d'étanchéité (13) présente une surface d'étanchéité (14) en forme d'arc.

4. Elément de vissage selon une des revendications 1 à 3, **caractérisé en ce que** la région d'étanchéité (13) est chambrée dans un évidement formé d'une surface d'épaulement (16) s'étendant en formant un angle aigu avec la surface de portée (10) et d'une surface frontale (17) s'étendant parallèlement à l'axe longitudinal du vissage.

5. Elément de vissage selon une des revendications 1 à 4, **caractérisé en ce que** le corps d'étanchéité (12) est configuré de manière que, dans l'état serré, il existe entre la pièce (15) et un segment libre de la partie de tête (2), situé au-delà du corps d'étanchéité (12), une distance minimum (A), en particulier d'environ 4mm, prévue de manière à éviter les corrosions de contact en présence d'un grande différence de potentiel entre la partie de tête (2) et la pièce (15).

6. Elément de vissage selon une des revendications 1 à 5, **caractérisé par** sa réalisation sous la forme d'une vis (1), la partie de tête (2) étant constituée par la tête de la vis et la partie filetée (3) par la tige de la vis, qui part de la tête de vis et présente un filetage extérieur, et la surface de portée (10) étant constituée par une surface frontale de la tête de vis qui entoure la tige de la vis.

7. Elément de vissage selon une des revendications 1 à 5, **caractérisé par** sa réalisation sous la forme d'un écrou (23), la partie de tête (2), qui constitue la partie filetée (3) présentant un filetage intérieur et la surface de portée (10) étant formée sur un côté frontal de l'écrou (23).

8. Elément de vissage selon la revendication 7, **caractérisé en ce que** le filetage intérieur est fermé à joint étanche ou peut être fermé à joint étanche vers l'extérieur, dans la région qui est à l'opposé de la surface de portée (10), de manière à éviter l'infiltration de liquides et/ou de gaz dans la région de la surface de portée (10) appuyée sur la pièce (15) à travers la région du filetage.

9. Elément de vissage selon la revendication 8, **caractérisé en ce que** l'écrou (23) est constitué par un écrou borgne, comprenant un segment de fermeture (24) en forme de chapeau.

10. Elément de vissage selon la revendication 8, **caractérisé en ce que** l'écrou (23) présente, dans la région terminale du filetage intérieur qui est à l'opposé de la surface de portée (10), une bague d'étanchéité (25) pour fermer à joint étanche une fente annulaire entre le perçage à filetage intérieur et une tige filetée vissée dans ce perçage.
